# EUROPÄISCHE PATENTSCHRIFT

(11) **EP 1 751 845 B1**
(45) Veröffentlichungstag und Bekanntmachung des Hinweises auf die Patenterteilung: **02.12.2015**
(21) Anmeldenummer: 05744995.1
(22) Anmeldetag: 03.06.2005
(51) Int. Cl.: H02P 6/18, H02P 6/20, H02P 6/24

(54) **BÜRSTENLOSER DC-MOTOR**
BRUSHLESS DC-MOTOR
MOTEUR A COURANT CONTINU SANS BALAIS

(30) Priorität: 04.06.2004 CH 9422004; 22.12.2004 CH 21222004
(43) Veröffentlichungstag der Anmeldung: 14.02.2007
(60) Teilanmeldung: 14004070.0
(73) Patentinhaber: Belimo Holding AG, 8340 Hinwil (CH)
(72) Erfinder: GROGG, Silvio, CH-8625 Gossau (CH); STÄHELI, Curdin, CH-8623 Wetzikon (CH); OCHSENBEIN, Martin, CH-8332 Russikon (CH)
(74) Vertreter: Roshardt, Werner Alfred
(86) Internationale Anmeldenummer: PCT/CH2005/000311
(87) Internationale Veröffentlichungsnummer: WO 2005/119898

(56) Entgegenhaltungen:
- EP-A- 0 242 039
- EP-A- 1 267 479
- WO-A-2005/048446
- DE-A1- 10 308 859
- FR-A- 2 851 093
- US-A- 5 327 052
- US-A- 5 942 870

## Beschreibung

Die Erfindung bezieht sich auf ein Verfahren zum Ansteuern eines bürstenlosen, einen Stator und einen Rotor umfassenden DC-Motors, welcher ein stark untersetztes Reduktionsgetriebe eines Stellantriebs für eine Klappe oder für ein Ventil zur Regelung eines Gas- oder Flüssigkeitsvolumenstroms betätigt, insbesondere auf dem Gebiet Heizung-Lüftung-Klima (HLK), Brand- und Raumschutz. Weiter betrifft die Erfindung einen bürstenlosen DC-Motor ohne Positionssensoren zur Durchführung des Verfahrens.

Elektrische Stellantriebe für die Motorisierung von Stellgliedern in Heizungs-, Lüftungs- und Klimaanlagen (HLK-Anlagen) werden seit mehr als 30 Jahren hergestellt. H LK-Stellglieder gewährleisten eine wirtschaftliche Volumenstromregelung von Gasen oder Flüssigkeiten, insbesondere von Luft und Wasser. Als kompakte Einheit umfassen sie nicht nur den Antrieb, sondern auch Druckfühler und Regler, alles in einem Gerät vereint.

Belüftungssysteme werden zunehmend in Gebäuden, insbesondere Wohn-, Büro-, Gewerbe- und Industriebauten, eingesetzt, in der Regel kombiniert mit Brand- und Rauchschutzeinrichtungen. In Belüftungsanlagen spielt die Volumenstromregelung mit schwenkbaren Luftklappen eine wesentliche Rolle. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, und die Messwerte an eine Elektronik weitergegeben.

Zum Bewegen einer Klappe in einem Belüftungssystem oder eines Kugelhahns in einem Wasserleitungssystem müssen verhältnismässig schwache Motoren grossflächige oder grossvolumige Regelorgane betätigen. Eine präzise und stabile Verstellung ist nur mit einer überaus starken Untersetzung möglich. Für das Schwenken einer Klappe oder das Drehen eines Kugelhahns um einen spitzen oder rechten Winkel sind zahlreiche Umdrehungen der Welle des Elektromotors notwendig.

Zwischen Motor und Klappe können mechanische Mittel zur Übertragung der Bewegung, insbesondere Federantriebe, angeordnet sein.

Ursprünglich hergestellte DC-Motoren haben vorzugsweise aus Graphit hergestellte Bürsten, die mechanisch die Kommutierung der einzelnen elektrischen Phasen des Rotors regeln, der Stator ist in diesem Fall mit Permanentmagneten ausgerüstet.

Elektronisch kommutierende DC-Motoren bekannter Bauart, auch EC-Motoren genannt, sind insbesondere für Applikationen geeignet, welche die Vorteile der kontaktlosen und elektronisch gesteuerten Kommutierung ausnutzen. Bei einer derart gesteuerten Kommutierung verschiebt sich die elektronische Stromspeisung der Statorspulen schrittweise von Pol zu Pol, dadurch wird der Rotor "mitgezogen". Bürstenlose DC-Motoren zeichnen sich aus durch billige Herstellungskosten und eine hohe Lebensdauer, in Verbindung mit vorzüglichen Regeleigenschaften für die Drehzahl und die Position.

Ein durch ein solches elektromagnetisches Drehfeld erzeugtes Drehmoment ist nahezu konstant, unabhängig von der Lage des Rotors und in linearer Abhängigkeit vom Drehstrom.

Jede der drei Phasen eines bürstenlosen DC-Motors ist mit einem oder zwei Transistoren gesteuert, je nachdem, ob die Spule in eine oder zwei Richtungen bestromt werden soll. Bei nur drei Steuerimpulsen pro elektrische Umdrehung werden die Wicklungen relativ schlecht ausgenutzt. Die Ansteuerung der Wicklungen mit sechs Transistoren gewährleistet eine höhere Ausnutzung der Wicklungen und eine gleichmässigere Drehmomentabgabe. Die Spulen können als Stern oder als Dreieck geschaltet sein, in beiden Fällen ist das Drehmoment bei durch je zwei Transistoren drei angesteuerten Phasen grösser.

Um bei der Kommutierung den geeigneten Moment zum Umschalten der Leistungstransistoren zu ermitteln, muss die aktuelle Position des Rotors bezüglich des Stators bekannt sein. Dazu sind insbesondere zweckmässig siliziumfreie Resolver und Hall-Sensoren geeignet, welche beiden Sensoren unabhängig von der Geschwindigkeit die absolute Position des Rotors angeben. Aus Kosten- und Miniaturisierungsgründen wird der Einsatz von Sensoren jedoch immer problematischer, sie müssen des Öfteren ersetzt werden.

Ein regelmässiges Drehmoment wird beispielsweise erzeugt, indem die Spulen mit um jeweils 120° verschobenen sinusähnlichen Signalen angesteuert werden. Bei niedriger Leistung kann wegen deren steileren Nulldurchgangs auch mit Rechtecksignalen angesteuert werden. Als Treiber werden sogenannte H-Brücken eingesetzt, wobei jeder Pol einer Spule über je einen Transistor mit der Versorgungsspannung und mit der Masse verbunden ist. Es muss jedoch gewährleistet sein, dass bei zwei Transistoren nicht beide gleichzeitig leitend sind. Die jeweiligen H-Brücken der Leistungselektronik werden in Funktion der Signale von Positionssensoren angesteuert. Sie dienen der Richtungsformation und werden als Stop-, Start- und PWM-Signale mit Hilfe eines Encoders angesteuert (PWM = Pulsweitenmodulation). Die Drehrichtung des Rotors wird durch den Schaltalgorithmus bestimmt, die Drehzahl des Motors über die Spulenspannung der jeweils eingeschalteten Spulen. Diese kann gegebenenfalls durch eine PWM gesteuert werden.

Die Kommutierungsfrequenz hängt von der vorgegebenen Drehzahl des Motors und der Anzahl Polpaare des Rotors ab.

In der Praxis werden immer zwei oder drei Statorspulen gleichzeitig bestromt, es muss die Differenz von zwei oder drei Spulen berücksichtigt werden. Die induzierten Spannungen von drei Spulenkombinationen sind jeweils um 120° phasenverschoben. Durch geeignete Kommutierung muss nun je nach Drehrichtung das maximale positive oder negative Drehmoment ausgenützt werden. Eine verzögerte oder verfrühte Kommutierung hat einen direkten Einfluss auf das mitzubringende Drehmoment des Motors. Der optimale Schaltpunkt für die Kommutierung von zwei und drei bestromten Spulen ist unterschiedlich, er wird durch Kommutierungs-Algorithmen ausgelöst.

Die Rotorposition wird in der Regel durch drei Positionssensoren, beispielsweise Hall-Sensoren, auf dem Motorprint bestimmt. Hall-Sensoren liefern, bei Versorgung mit einem konstanten Strom, eine Differenzspannung in Funktion des sie durchfliessenden Magnetfeldes, was Halleffekt genannt wird.

In der DE 19745312 A1 wird eine Ansteuerschaltung für einen bürstenlosen, elektronisch kommutierten Gleichstrommotor offenbart. In Reihe mit jedem Wicklungsstrang des Motors ist ein elektronisches Schaltelement angeordnet, welches von einem Positionssensor angesteuert wird. Jeder Wicklungsstrang ist über jeweils eine Auskoppeldiode mit einem gemeinsamen Schaltungspunkt verbunden. Parallel zu den Wicklungssträngen und den zugehörigen Auskoppeldioden ist eine Schutztransistorbeschaltung angeordnet, welche induktionsbedingte Spannungsspitzen eliminiert. Obwohl mit einfachen und preiswerten Bauteilen ein guter Wirkungsgrad erzielt wird, verbleibt der Nachteil auszuwechselnder Positionssensoren.

EP 0 242 039 B1; (General Motors) beschreibt einen Schrittmotor für die Ansteuerung einer Drosselklappe eines Automotors. Zwischen Motor und Drosselklappe ist ein Reduktionsgetriebe geschaltet und für die Bestimmung der Rotorposition sind BEMF-Detektoren vorgesehen.

Auch aus der US 5,327,052 (Toshiba) ist die Steuerung eines bürstenlosen DC-Motors bekannt, wobei die Rotorposition nicht mit Positionssensoren, sondern durch die Auswertung von BEMF-Signalen erfolgt. Zum Starten des Motors werden zwei der drei Spulen zunächst mit einem Standardstrom versorgt. Beginnt sich der Rotor daraufhin zu drehen, kann dessen Position via den Positionsdetektor bestimmt werden. Beginnt sich der Rotor jedoch innerhalb einer bestimmten Zeit nicht zu drehen, wird der Startstrom erhöht und der Startvorgang wiederholt.

Die Erfinder haben sich die Aufgabe gestellt, ein Verfahren zum Ansteuern eines bürstenlosen DC-Motors und einen DC-Motor der eingangs genannten Art zu schaffen, welche die Kosten- und Qualitätsprobleme bezüglich der Positionssensoren lösen.

Mit Bezug auf das Verfahren wird die Aufgabe erfindungsgemäss dadurch gelöst, dass der elektrische Stromfluss in die Statorspulen ohne eingebaute Positionssensoren programmgesteuert kommutiert wird wie im Anspruch 1 definiert. Spezielle und weiterbildende Ausführungsformen des Verfahrens sind Gegenstand von abhängigen Ansprüchen.

In einer CPU, zweckmässig in wenigstens einem Mikroprozessor, werden die Algorithmen von allen wesentlichen Verfahrensabläufen eingegeben und abrufbar gespeichert, beispielsweise ein S tart-Algorithmus, e in Brems-Algorithmus, ein Brems-Algorithmus für einen Reversekick am Anschlag, also ein kontrolliertes Zurückfahren und Bremsen nach einem harten Anschlag, wobei der Anpressdruck im wesentlichen aufrechterhalten wird, und schliesslich ein Relax-Algorithmus, bei welchem das Reduktionsgetriebe vollständig entspannt wird.

Die abrufbar gespeicherten Algorithmen werden laufend an die Praxis angepasst und wo notwendig verbessert, das System ist also selbstlernend.

Das erfindungsgemässe Grundprinzip besteht darin, dass die Polaritäten der Nulldurchgänge der drei Motor-Phasenspannungen geprüft werden. Jeder Polaritätswechsel bei einem Nulldurchgang einer Phasenspannung kann einer bestimmten Rotorposition zugeordnet werden. Sobald die entsprechende R otorposition erreicht ist, kann die nächste Kommutierung, also der neue Stromzufluss zu den Statorspulen, so geändert werden, dass das erzeugte vorauseilende Magnetfeld dem Rotor ein Drehmoment verleiht. Dank diesem System können Positionssensoren weggelassen werden.

Die Nulldurchgänge der Phasenspannungen können jedoch erst ab einer bestimmten minimalen Drehzahl des Rotors eindeutig detektiert werden, zu niedrige Drehzahlen ergeben undefinierte, schleifende Schnitte von sinusförmigen oder sinusartigen Kurven mit der Nulllinie.

Nach einer speziellen Ausführungsform der Erfindung zählt eine Elektronik die Umdrehungen pro Minute (rpm) des Rotors des DC-Motors. Dabei wird vorzugsweise jede Motorkommutierung erfasst und gezählt, wobei spezielle Algorithmen für den Start und den Stop dafür sorgen, dass Motordrehzahlen unter etwa 200 rpm so schnell durchlaufen werden, dass keine Zählfehler entstehen. Unter der Voraussetzung, dass der Zähler einmal zu Beginn einen Synchronisations- bzw. Referenzpunkt für die Zuordnung zum Klappenwinkel hat, weiss die Positionsregelung immer genau Bescheid, welches der Istwert, also die exakte Position der betreffenden Klappe ist. Die zählende Elektronik bietet auf diese Weise einen nahezu kostenlosen Ersatz für ein relativ teures, verschleissbehaftetes Potentiometer in üblichen Anordnungen.

Mit Bezug auf den DC-Motor wird die Aufgabe erfindungsgemäss dadurch gelöst, dass er einen Stator mit drei Spulen, welche sich über 3n Statorpole erstrecken, und einen ringförmigen Dauermagnet-Rotor mit 2m Dauermagnetsegmenten alternierender Polarität (N, S), einem becherförmigen Aussenläufer und einer coaxialen Antriebswelle umfasst, wobei n und m ganzzahlige, voneinander unabhängige Multiplikationsfaktoren 1, 2, 3, 4..... sind.

Spulen und Rotorsegmente können nach der Regel der Kombinatorik miteinander eingesetzt werden, in der Praxis haben sich jedoch die Kombination n = 1 und m = 1, sowie n = 3 und m = 6 als besonders vorteilhaft erwiesen.

Ein von einem erfindungsgemässen DC-Motor über eine Getriebemechanik betätigter Stellantrieb kann durch eine Feder, zweckmässig eine Spiralfeder, ergänzt werden, welche bei einem motorischen Betrieb aufgezogen bzw. vorgespannt wird und dadurch potentielle Energie speichert. Das Aufziehen der Feder erfolgt vorzugsweise, jedoch nicht zwangsweise in Auf-Richtung. Eine elektronische Powerfail-Detektion erkennt einen Ausfall der Betriebsspannung, schaltet zuerst alle Brückenschalter der Endstufe aus und löst damit einen Rücklauf der vorgespannten Feder aus. Dabei wird der DC-Motor freilaufend, die in der Feder gespeicherte potentielle Energie wirkt als Drehmoment entgegen der Aufzugsrichtung und setzt den freilaufenden Motor in Bewegung. Je nach der Last am Getriebeabgang beschleunigt die vorgespannte Feder auf eine entsprechend hohe Drehzahl, bis die Last, Reibung und das Federmoment im Gleichgewicht sind. Wenn die erwähnte Last a m G etriebeabgang d as F e-dermoment unterstützt oder dieses nurwenigbelastet, kann die Drehzahl i m Federrücklauf so hoch werden, dass das ganze mechanische System gefährdet wird. Insbesondere kritisch ist das Erreichen des Endanschlags. Um die dabei einwirkende kinetische Energie und damit die Belastung auf ein sicheres Mass zu begrenzen, muss die Drehzahl begrenzt werden. Dafür könnten in an sich bekannter Weise Zenerdioden eingesetzt werden, welche die generatorisch erzeugte Spannung des Motors begrenzen und die darüber hinaus wirkende Energie als Wärme vernichten.

Vorzugsweise wird jedoch die Eigenschaft von D C-Motoren ausgenützt, d ass bei einem Kurzschluss wenigstens eines Teils ihrer Wicklungen ein Bremsmoment entsteht, welches etwa proportional zur Drehzahl ist. Dies lässt sich bei den erfindungsgemässen bürstenlosen DC-Motoren einfach realisieren, indem zwei d er drei Wicklungen kurzgeschlossen werden. D as M ass d er Bremsung kann über ein pulsweitenmoduliertes Steuersignal (PWM-Signal) eingestellt werden. Dies erfolgt in Abhängigkeit von der aktuellen Drehzahl, welche über die gemessenen Nulldurchgänge der dritten, nicht kurzgeschlossenen Motorwicklung jederzeit ermittelt werden kann. Unterhalb einer programmierbaren Grenz-Drehzahl wird das PWM-Signal auf Null gestellt, welches nach dem Überschreiten der Grenz-Drehzahl kontinuierlich bis zu einem Maximum von 100 % erhöht. Dadurch entsteht eine einfache Regelung für die Drehzahl-Begrenzung, welche so über einen weiten Lastbereich konstant gehalten werden kann. Derart verhindert bei einem Stromausfall die vorgespannte Feder das betreffende Stellorgan, beispielsweise eine Klappe oder ein Ventil, ein zu schnelles Schliessen.

Obwohl das erfindungsgemässe Verfahren und der bürstenlose DC-Motor insbesondere auf das Gebiet HLK ausgerichtet ist, soll dies keine Beschränkung sein. Durch dimensionsbedingte Anpassungen können mit fachmännischem Wissen und Können auch in Automobilen Gasströme, Volumenströme und/oder Stellwinkel analog geregelt werden.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 ein Blockschaltbild des gesamten Systems einer Motoransteuerung für einen DC-Motor,
- Fig. 2 ein Bestromungsschema für den Stator eines DC-Motors
- Fig. 3 einen K ommutierzyklus eines D C-Motors mit sechs R otorpositionen.
- Fig. 4 den Anteil der einzelnen Statorspulen am Motordrehmoment gemäss Fig. 3,
- Fig. 5 den Zusammenhang der Phasenspannungen mit der erwarteten Polarität eines Nulldurchgangs,
- Fig. 6 eine Abbremsung durch Blockieren,
- Fig. 7 einen Zyklus Bremsen - Halten - Starten,
- Fig. 8 das Verhalten eines DC-Motors im Anschlag,
- Fig. 9 das Entspannen eines DC-Motors im Anschlag,
- Fig. 10 das Verhalten eines DC-Motors beim Anfahren unter erschwerten Bedingungen (Boost Konzept),
- Fig. 11 eine Variante eines DC-Motors.
- Fig. 12 einen Stellantrieb mit einem DC-Motor, und
- Fig. 13 einen Federantrieb entsprechend Fig. 12.

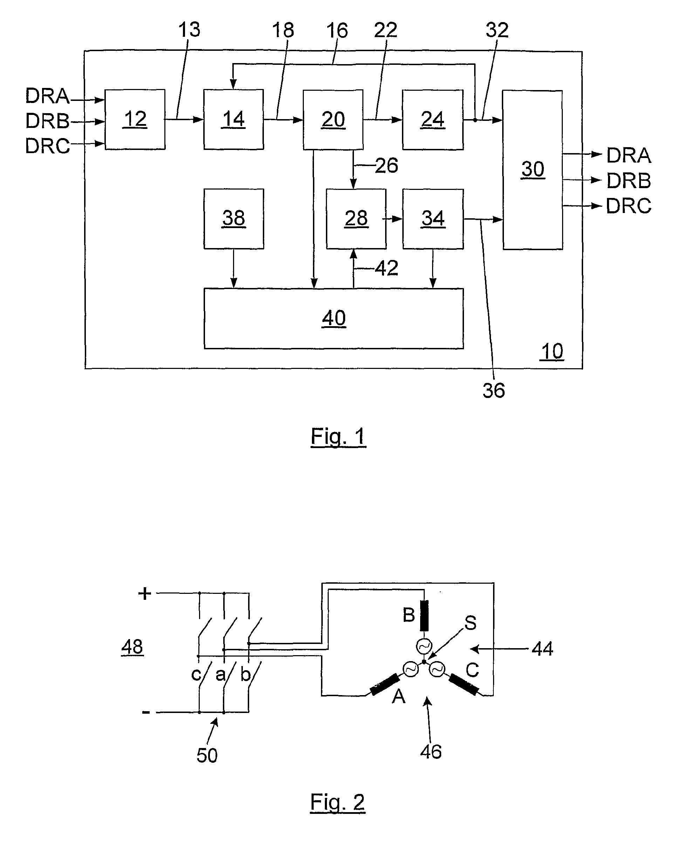

Fig. 1 zeigt ein Blockschaltbild einer Motoransteuerung 10 für einen DC-Motor (46 in Fig. 2). Dieser ist, wie für eine sehr starke Untersetzung üblich, leistungsschwach und klein dimensioniert. Für Details bezüglich eines Reduktionsgetriebes wird beispielsweise auf PCT/CH05/000126 der Patentanmelderin verwiesen.

Drei Motor-Generatorströme werden zur Kontrolle von deren Spannung DRA, DRB und DRC über BEMF-Komparatoren 12 (BEMF = Back Electromagnetic Force) in die Motoransteuerung 10 geleitet. Die BEMF-Komparatoren 12 an sich bekannter Bauart prüfen die Polarität der Nulldurchgänge der Phasenspannungen DRA, DRB und DRC. Jeder Wechsel der Polarität, mit anderen Worten jeder Nulldurchgang, kann einer bestimmten Rotorposition des DC-Motors 46 zugeordnet werden. Sobald diese Polarität bekannt ist, wird die nächste Kommutierung, also der neue Stromzufluss zu den Statorspulen (A, B, C in Fig. 2), bestimmt.

Ein darauf folgender ZERO-Detektor 14 detektiert die gültigen Nulldurchgänge der Phasenspannungen DRA, DRB und DRC, bzw. von deren BEMF-Signal 13, die durch nadelförmige ZERO-Impulse 18 angezeigt werden. Die Auswertung der drei Phasenspannungen DRA, DRB und DRC kann nur erfolgen, wenn der ZERO-Detektor 14 ein entsprechendes Signal 16 empfängt, was mit einem Rückwärtspfeil angedeutet ist.

Ein Periodenregler 20 empfängt die ZERO-Impulse 18 und berechnet daraus den nächsten Kommutierungszeitpunkt. Falls eine nächste Kommutierung tatsächlich erfolgen soll, wird ein NEXT-Impuls 22 zu einem Zykluszähler 24 geleitet. Weiter wird vom Periodenregler 20 ein PER-Signal 26 an einen Drehzahlregler 28 ausgegeben. Mit PER (PER = Zeitperiode) wird der Abstand zwischen zwei ZERO-Impulsen bezeichnet und ist somit umgekehrt proportional zur Drehzahl. Ein Drehzahlregler 28 steuert und regelt die Anzahl Umdrehungen des Rotors pro Zeiteinheit, meist pro Minute, welche mit rpm bezeichnet wird.

Der Zykluszähler 24 zählt die ganzzahligen Vielfachen 0, 1, 2, 3, ........ und gibt an eine Motorsteuerung 30 einen mit CYNO (Zyklusnummer) bezeichneten Zählerwert 32 aus. Jeder dieser vorliegend sechs Zählerwerte 32 ist fix einem der sechs möglichen, später diskutierten H-Brückenzustände zugeordnet. Da wie erwähnt ein N EXT-Impuls 22 den Z ykluszähler 24 auslöst, steuert dieser somit auch die Kommutierung. Wie ebenfalls erwähnt, geht vom Zählerwert 32 CYNO eine Rückmeldung in Form eines Signals 16 zum ZERO-Detektor 14.

Der über ein PER-Signal 26 angesteuerte Drehzahlregler 28 erfolgt hardwaremässig über einen PI-Regler (PI = Proportional/Integral) an sich bekannter Bauart. Der Sollwert wird einer OTP-Zelle (OTP = one time programmable) entnommen. Wahlweise können über Mikroprozessoren (MP) beliebige Soll-Werte in ein flüchtiges Register geschrieben werden. Als Ist-Wert wird das PER-Signal 26 des Periodenreglers 20 verwendet. Dieses ist, wie erwähnt, der Drehzahl umgekehrt proportional und wird im Drehzahlregler 28 ausgerechnet. Über einen PWM-Taktgebergenerator 34 wird ein PWM-Signal 36 an die Motorsteuerung 30 abgegeben, wobei die Dauer eines Impulses vorliegend 52 µsec beträgt. Diese Pulsweitenmodulation PWM entspricht der Spannung, die am DC-Motor 46 angelegt wird. Die PWM-Frequenz des Taktgebergenerators 34 beträgt vorliegend 19,2 kHz.

Die Motorsteuerung 30 wird durch die PWM-Modulation 36 und die Kommutierung generiert. Die ausgegebenen Phasenspannungen DRA, DRB und DRC sind die direkten Ansteuerungen für die Motortreiber in Form von Leistungs-H-Brücken.

Ein Analog-Interface 38 erlaubt die Steuerung mit analogen Signalen. Es sind AZ-Applikationen (AZ = auf/zu) möglich, und mit einem externen Potential können auch stetige SR-Applikationen (SR = stetiger Regler) realisiert werden.

Ein Digitalblock 40 steuert anhand einer Zustandskontrolle (State Machine) die internen Abläufe der Motoransteuerung 10. Zum Starten und Bremsen des DC-Motors 46 wird vom Digitalblock 40 ein ROT-Signal 42 erzeugt und an den Drehzahlregler 28 geleitet.

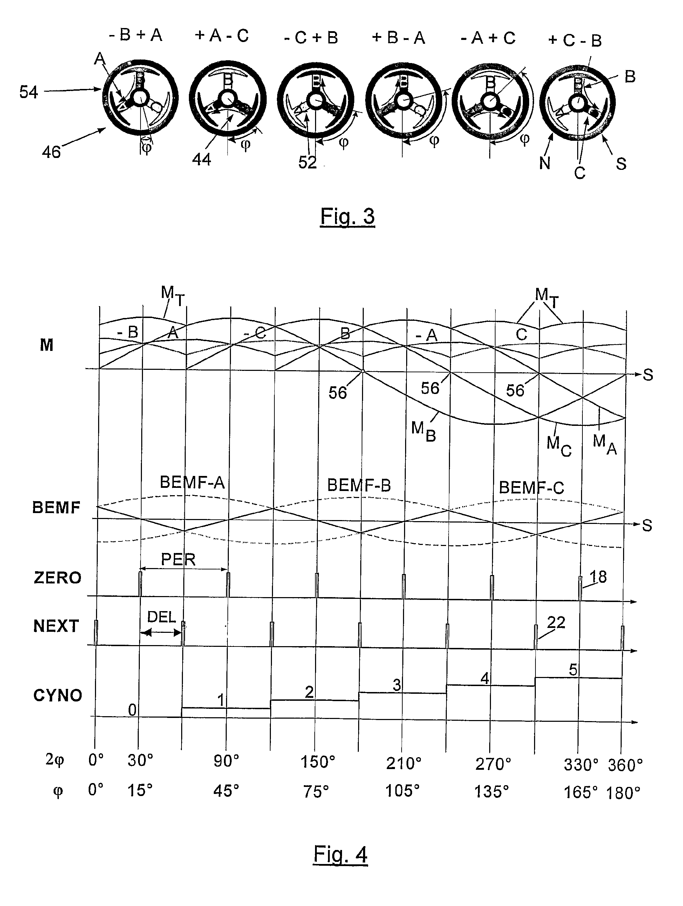

In einem Bestromungsschema gemäss Fig. 2 für den Stator 44 eines DC-Motors 46 sind die Pole einer Gleichstromquelle 48 mit + und - bezeichnet. Der Stator 44 hat drei sternförmig angeordnete Statorspulen A, B und C, welche in einem auch die Nulllinie bildenden Sternpunkt S miteinander verbunden sind. Eine programmgesteuert betätigbare Schaltgruppe 50 erzeugt einen aus sechs Kommutierungen bestehenden Kommutierzyklus, welche in der nachfolgenden Fig. 3 im Detail dargestellt ist.

Bei einem Stromausfall werden zwei der drei Brückenschalter a, b, c gegen die Erde kurzgeschlossen, dadurch entsteht ein Bremsmoment. Vorliegend sind dies die Brückenschalter a und b, wodurch über die Statorspulen B und C ein Kurzschluss gebildet wird. Die Statorspule A ist ausgeschaltet, aber nicht kurzgeschlossen. Zweckmässig werden die Brückenschalter a, b vorerst nur während kurzzeitigen Zeitperioden geschlossen, welche dann immer länger werden. Mit der Erzeugung eines Bremsmomentes wird verhindert, dass bei einem Stromausfall ein Stellglied unkontrolliert zurückschlägt und Schaden erzeugt. Das paarweise Schliessen von zwei beliebigen Brückenschaltern a, b, c erfolgt über Transistoren, welche ein pulsweitenmoduliertes Steuersignal empfangen.

In Fig. 3 sind sechs Positionen des Dauermagnet-Rotors 54 eines DC-Motors 46 dargestellt. Der Rotor 54 hat vorliegend vier gleich grosse magnetische Segmente, alternierend ist je ein Nordpol N und Südpol S angeordnet. Die sechs Rotorpositionen stellen einen Kommutierzyklus dar, wobei die Statorspulen A, B und C paarweise mit + und - bestromt sind. Die Bestromung ist programmgesteuert und kommutiert über den Stator 44 ein rotierendes Magnetfeld, welches die Permanentmagneten d es Rotors 54 mit einem vorauseilenden Drehfeld "nachzieht". Die Anker 52 der drei Statorspulen A, B, C erstrecken sich ankerförmig über einen Teil des Innenmantels des Rotors 54.

Mit dem Winkel ϕ wird die mechanische Position des Rotors 54 gegenüber dem Nullpunkt gezeigt. Von links nach rechts ist (p 15°, 45°, 75°, 105°, 135° und 165°.

In Fig. 4 ist der Anteil der einzelnen Statorspulen A, B und C am Drehmoment dargestellt, mit anderen Worten der Zusammenhang zwischen der Rotorposition und den am Rotor 54 wirkenden Drehmomenten. Die mechanischen Winkel ϕ (Fig. 3) des Rotors 54 sind mit vertikalen Linien dargestellt. Diese Linien entsprechen auch der elektrischen Position 2 ϕ auf der Abszisse, 30°, 90°, 150°, 210°, 270° und 330° der jeweiligen mechanischen Winkel ϕ.

Für die Graphik ist ein vierpoliger DC-Motor 46 (Fig.2, 3), nicht ein in der Praxis üblicher zwölfpoliger Motor aufgezeichnet, weil sich die Zusammenhänge mit einem möglichst einfachen Motor besser zeigen lassen. Ein zwölfpoliger Motor dreht dreimal langsamer als ein vierpoliger Motor, im übrigen bestehen keine wesentlichen Unterschiede.

In der Drehmomentdarstellung M sind die einzelnen Anteile der Statorspulen A, B und C am Gesamtdrehmoment M_{T} gezeigt. Jede dieser Statorspulen wirkt mit einem sinusförmigen Drehmoment auf den Rotor. Da jede Statorspule während 60°, beidseits des Nulldurchgangs während 30°, ausgeschaltet ist, fehlt dort dieser Drehmomentänteil. Dies zeigt sich in der gewellten Form des Gesamtdrehmoments M_{T}. Beim Nulldurchgang 56 des sinusförmigen Drehmoments M_{B}, wo die Bestromung lediglich durch die Statorspulen A u nd C erfolgt, ist eine stabile Stellung erreicht. Entsprechendes gilt für die Drehmomente der Statorspulen A und C. Im folgenden werden auch die Nulldurchgänge der Drehmomente M_{A}, M_{B} und M_{C} mit 56 bezeichnet.

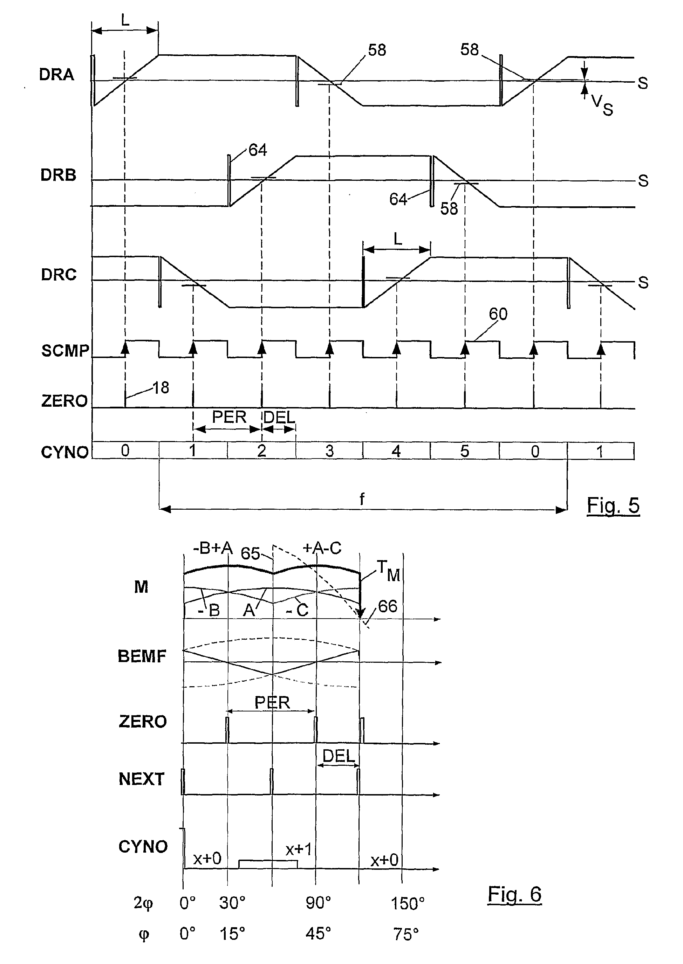

Unterhalb der Drehmomentenkurven M sind weitere Parameter in den jeweiligen Positionen mechanisch ϕ bzw. elektrisch 2 ϕ dargestellt:
- BEMF. Die Kurven BEMF-A, BEMF-B und BEMF-C der einzelnen Statorspulen A, B, und C verlaufen sinusförmig. In den Bereichen ± 30° der Nulldurchgänge, d. h. der Schnittpunkte der Sinuskurven mit der Nulllinie S im Bereich der hochohmigen Kommutierungslücken L (Fig. 5), sind die Kurven durchgehend gezeichnet.
- ZERO. Bei ϕ = 15°, 45°, 75°, 105°, 135° und 165° wird ein ZERO-Impuls 18 ausgelöst, d. h. ein gültiger Nulldurchgang des BEMF-Komparators 12 (Fig. 1) registriert. Der Winkel zwischen den Nulldurchgängen ist mit PER bezeichnet.
- NEXT. Ebenfalls mit Nadelimpulsen sind die NEXT-Impulse 22, welche die Zeitpunkte des Kommutationswechsels auslösen, aufgezeichnet. Diese sind g egenüber den Z ERO-Impulsen 18 u m einen Winkel D EL = PER/2 zeitlich versetzt. Vorliegend beträgt die Dauer der Nadelimpulse bei ZERO und NEXT 52 Mikrosekunden (µsec).
- CYNO. Schliesslich sind unter CYNO die Zählerstände des Zykluszählers 24 (Fig. 1) von 0 bis 5 dargestellt, mit anderen Worten wird angegeben, welche Kommutierung zum betreffenden ϕ am DC-Motor anliegt.

In Fig. 5 ist der Zusammenhang der Phasenspannungen DRA, DRB und DRC mit hochohmigen Kommutierungslücken L von vorliegend elektrisch 2 ϕ =60° dargestellt. In diesen hochohmigen Kommutierungslücken L, bei niedriger Drehzahl an deren Ende, bei hoher Drehzahl am Ende der Bestromungsphase, wertet der BEMF-Komparator 12 (Fig. 1) die Phasenspannungen aus. Die BEMF-Komparatorenschwellen 58 sind je nach Polarität des zu erwartenden Nulldurchganges knapp, um V_{S}, über- oder unterhalb der Nulllinie S gelegt. Dies erhöht den Störabstand und liefert zuverlässigere ZERO-Impulse 18, was hauptsächlich bei tiefen Drehzahlen Verbesserungen bringt. Am Anfang einer hochohmigen Kommutierungslücke L wird jeweils ein Rücklaufimpuls 64 erzeugt. Ein durch die BEMF-Komparatoren 12 korrekt detektierter Nulldurchgang erzeugt eine positive SCMP-Flanke. Das SCMP (SCMP = Synchronized Comparator) wird mit der Kommutierung der H-Brücke zurückgesetzt. Die e r-wähnten Flanken erzeugen die vorliegend 52 Mikrosekunden breiten ZERO-Impulse 18. Der Abstand zwischen den Z ERO-Impulsen 18 i st das "Zehn Bit Word" PER. Dieses ist umgekehrt proportional zur Drehzahl. PER/2 ergibt die DEL (DEL = Delay). Kommutiert wird zwischen zwei ZERO-Impulsen 18. CYNO ist der Wert des 0, 1, 2, 3, 4, 5-Zykluszählers und zeigt an, welche Kommutierung am DC-Motor anliegt. Ein Kommutierungszyklus f entspricht 1/Kommutierungsfrequenz.

Fig. 6 zeigt eine abrupte Abbremsung, auch Blockier- oder Knebel-Bremsung genannt. Die Positionen des Rotors 54 entsprechen der linken Hälfte gemäss Fig. 3. Bei einem mechanischen Winkel ϕ von 30° wird durch einen starken Stromstoss 65 ein verstärktes resultierendes Drehmoment -B+A erzeugt, was durch eine abfallende gestrichelte Linie 66 dargestellt ist. Der Rotor wird mit sofortiger Wirkung gestoppt. Der Haltepunkt ist stabil im Bereich von 2ϕ ± 180° elektrisch, also ϕ ± 90° mechanisch. Der Rotor kehrt innerhalb dieses Bereichs wieder an den vorgesehenen Haltepunkt zurück. Diese Bremsmethode ist sehr zuverlässig. Das gesamte Drehmoment T_{M} fällt drastisch ab.

Der Zählerwert CYNO steigt vorerst von x+0 auf x+1, fällt jedoch nach dem Stromstoss wieder auf x+0. In Analogie zum Bremsen eines Wagens mit Speichenrädern durch eine Stange wird der Bremsvorgang gemäss Fig. 6 "Knebel-bremsung" genannt.

Gemäss Fig. 6 wird zum Kommutierungszeitpunkt statt der nächsten nochmals die letzte Phase aktiviert, weil diese zu diesem Zeitpunkt genau einen Drehmomenten-Nulldurchgang hat.

Das Abbremsen gemäss Fig. 6 mit PWM=0 ist eine einfache Stoppmethode für einen DC-Motor, hat aber den Nachteil, dass bei tiefen Drehzahlen auch das Bremsmoment abnimmt. Der starke zusätzliche Stromstoss 65 muss im richtigen Moment erfolgen, was wegen der schwer voraussehbaren Motorposition nicht einfach ist. Bevorzugt wird deshalb die Drehzahl auf 350 bis 400 rpm (Umdrehungen pro Minute) heruntergeregelt, worauf der Stromstoss 65 erfolgt, der den Rotor sofort blockiert. So kann der richtige Moment für den Stromstoss nicht mehr verpasst werden.

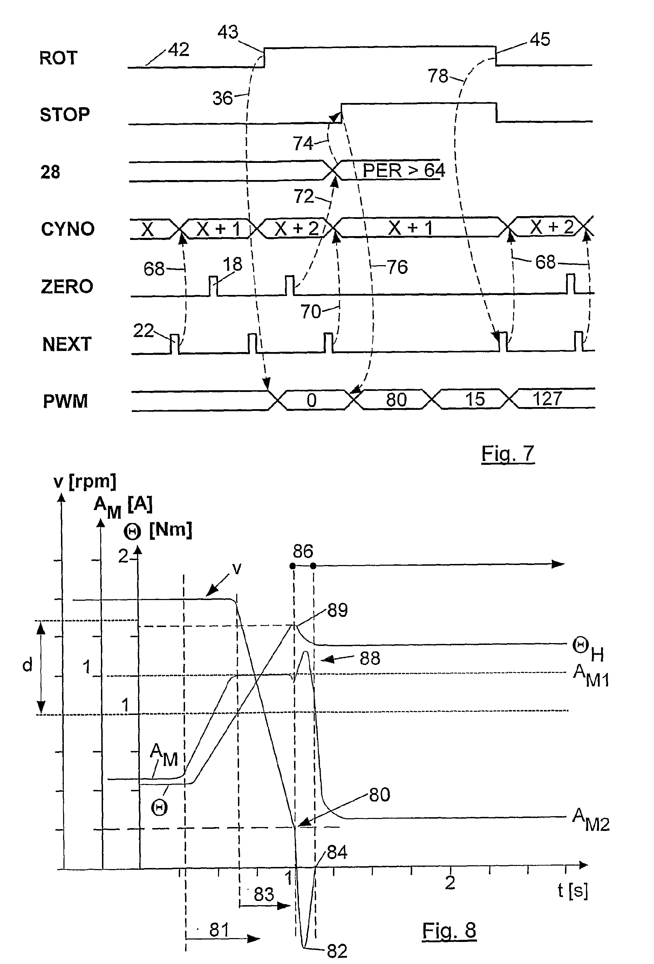

Ein weiteres Verfahren zum Abbremsen eines DC-Motors wird in Fig. 7 anhand eines Zyklus' Bremsen - Halten - Anfahren dargestellt. Der normale Betriebsablauf wird durch Pfeile 68 charakterisiert. Beim Einleiten des Bremsensgibt die Zustandskontrolle (State Machine) im Digitalblock 40 mittels einer fallenden Flanke 43 des ROT-Signals 42 der Motorsteuerung 30 via PWM-Taktgeber-Generator 34 (Fig. 1) bekannt, dass der DC-Motor gestoppt werden soll, was mit einem PWM-Signal 36 erfolgt. Dadurch wird die PWM auf 0 gesetzt, d. h. die H-Brücken schliessen jetzt die S tatorspulen kurz, w as den D C-Motor abbremst. Es wird aber weiter anhand der BEMF-Auswertung kommutiert, die Rotorposition b leibt also weiterhin bekannt, was durch die Pfeile 70, 72 dargestellt i st. Sobald die Geschwindigkeitssteuerung 28 anhand der PER-Signale 26 feststellt, dass ein Wert von vorliegend 400 rpm (Umdrehungen pro Minute) unterschritten wird, wird das durch die Pfeile 74, 76 charakterisierte Stoppverfahren eingeleitet. Die Motorsteuerung 30 wechselt statt auf den nächsten Kommutierungszustand auf den letzten, die entsprechenden Statorspulen werden für 100 ms mit einer PWM=80 bestromt. Dadurch wird der Rotor sofort gestoppt. Der Zählerwert CYNO wird dabei um 1 zurückversetzt. Nach dem Schnellstopp im Sinne eines in die Speichen eines Rades gehaltenen Knebels wird während einer Haltephase die PWM auf 15 oder 0 reduziert. Der erneute Start des Rotors wird durch die ansteigende Flanke des ROT-Signals 42 ausgelöst, über den Pfeil 78 einen NEXT-Impuls 22 erzeugt und die Statorspulen von der stromlosen oder gehemmten PWM-Schaltung auf 127 erhöht. Nach dem Start wird anhand der BEMF-Auswertung normal kommutiert.

Fig. 8 zeigt das Verhalten eines DC-Motors im praktischen Betrieb, wenn beispielsweise eine Luftklappe anschlägt. Auf der Abszisse ist die Zeit t, auf der Ordinate von links nach rechts die Drehzahl v, der Motorstrom A_{M} und das Drehmoment Θ aufgetragen.

Die Drehzahlkurve v verläuft vorerst parallel zur Abszisse, die Drehzahl ist konstant. Zur Einleitung des Bremsprozesses (Pfeil 81) wird der Motorstrom A erhöht, bis die Stromgrenze AM erreicht ist (Pfeil (83), zeitlich etwas verzögert steigt auch das Drehmoment Θ. Die Einleitung des Bremsprozesses (Pfeil 81) erfolgt, wenn die Klappe am Anschlag aufschlägt. Wie in Fig. 7 wird die PWM auf 0 gesetzt wird, die H-Brücken schliessen die Statorspulen kurz. Auch nach dem Aufschlag der Klappe läuft der DC-Motor weiter, er wird bis zum Erreichen des Anschlags 80 abgewürgt, wo keine Nulldurchgänge mehr gemessen werden können, die Position des Rotors geht verloren. Nachdem Stillstand des DC-Motors beim Scheitel 82 würde dieser dank der Elastizität des stark untersetzten gespannten Getriebes rückwärts drehen, bis die Klappe mit einem restlichen Auflagedruck am Anschlag bleibt. Die Position des Rotors kann mit speziellen Massnahmen wieder erfasst werden, wenn sich das Untersetzungsgetriebe im Punkt 84, im Bereich der kontrollierten Abbremsung 86 ("Kickbrake"), stillsteht. Würde das Untersetzungsgetriebe über dessen Selbsthemmung hinaus zurückdrehen, ginge der Anpressdruck der Klappe verloren. Nach dem Erreichen des Scheitels 82 wird der DC-Motor kurz in Gegenrichtung beschleunigt, damit BEMF-Signale 13 (Fig. 1) abgegeben und ein definierter Haltestrom eingestellt werden kann. Die Logik hat erneut Kenntnis über die Rotorposition. Nun kann der Rotor kontrolliert mit PWM=0 abgebremst werden, sobald die Drehzahl beispielsweise unter 400 oder 500 rpm abgesunken ist. Das kurze Zurückdrehen des DC-Motors vermindert den Anpressdruck der Luftklappe nur minimal, da dazu nur einige wenige Motorumdrehungen benötigt werden.

Der Motorstrom AM steigt im Bereich der kontrollierten Abbremsung 86 ("Kickbrake") an, was mit Boost-Motorstromerhöhung 88 bezeichnet wird, und sinkt dann auf ein tieferes Niveau A_{M2} ab, welches vorliegend bei etwa 20 bis 30% des Nennstromes liegt. Der abgesenkte Motorstrom A_{M2} wird während der Haltephase der Luftklappe mit einer geringen PWM betrieben.

Das Drehmoment Θ steigt bist zum Einsetzen der kontrollierten Abbremsung 86 ("Kickbrake") an, erreicht einen maximalen Scheitel 89 und sinkt während der Anschlagbremsung 86 auf das konstante Drehmoment in der Halteposition, das Haltemoment Θ_{H} ab. Der dynamische Anteil der Anschlagskraft ist mit d bezeichnet.

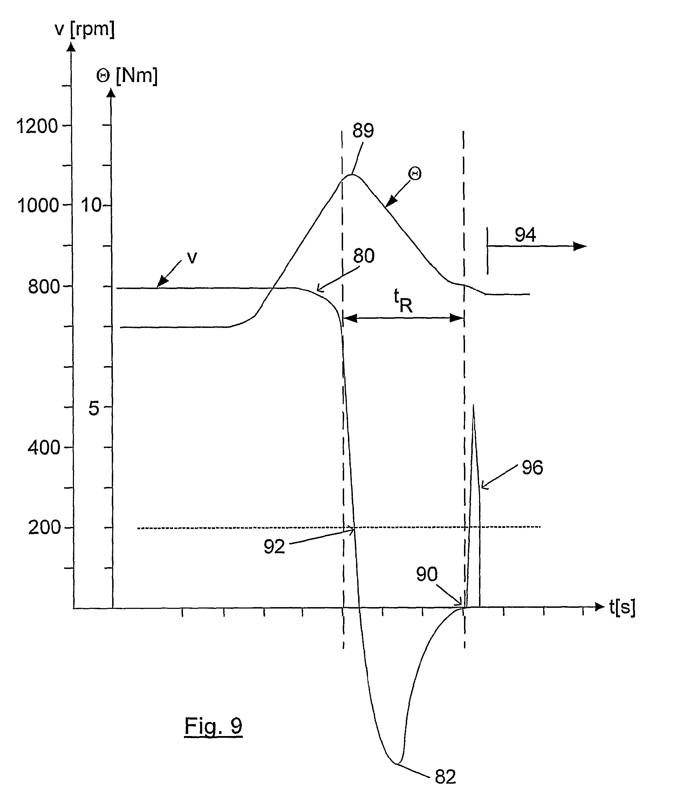

In Fig. 9 ist die Drehzahl v und das Drehmoment Θ gegen die Zeit t aufgezeichnet. Im Gegensatz zu Fig. 8 wird hier kein Haltemoment Θ_{H} aufrechterhalten, das Untersetzungsgetriebe ist nach einem ungebremsten Aufschlag der mit dem DC-Motor angetriebenen Luftklappe völlig entspannt. Beim Aufschlag 80 der Luftklappe läuft der DC-Motor dank der Elastizität des Untersetzungsgetriebes weiter, bis der Scheitel 82 erreicht ist. Dank der Elastizität dreht der Motor zurück und erreicht den Stillstand 90. Unmittelbar nach dem Anschlag der Klappe (Bereich 80) wird der DC-Motor für einige Sekunden t_{R} kurzgeschlossen. Das wirkt sich beim Entspannen (Zurückdrehen des Untersetzungsgetriebes) mechanisch dämpfend aus. Mit anderen Worten dreht bei tiefen Drehzahlen das Untersetzungsgetriebe ungehemmt, bei höheren Drehzahlen fliesst ein Kurzschlussstrom, der den Rotor bremst.

Wenn die Drehzahl v vorliegend 200 rpm unterschreitet, entstehen keine BEMF-Signale mehr, die Kommutationsposition geht verloren. Nach der Stillstandsposition 90 wird der DC-Motor kurz in Gegenrichtung beschleunigt und dann kontrolliert abgebremst. Je nach Einstellung wird nun im Motor ein Drehmoment eingeprägt oder der Motorstrom stromlos geschaltet. Der Motor ist nun mit bekannter Kommutationsposition in Halteposition, wie dies mit Pfeil 94 angedeutet wird. Dieser letzte Schritt wird Rückwärtsimpuls 96 (reverse kick) genannt.

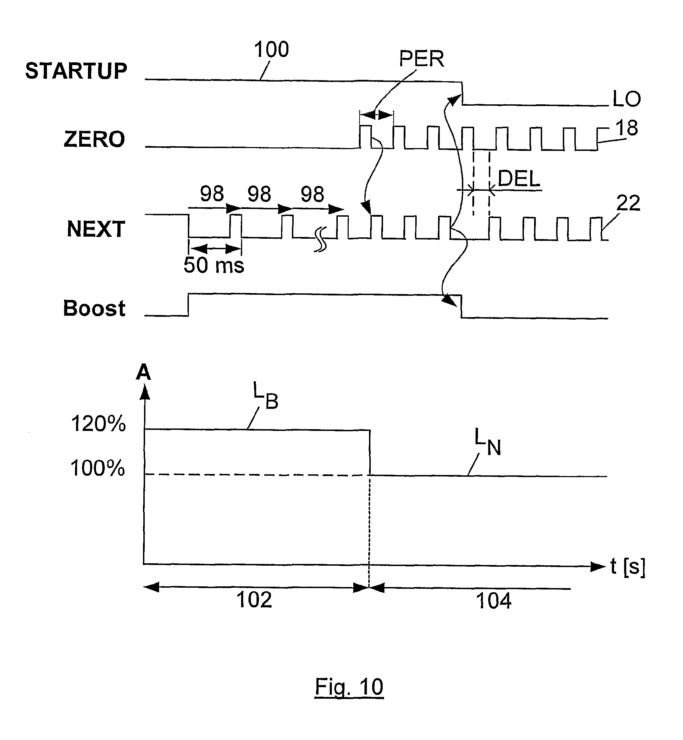

Mit dem Einschalten der Funktion "Boost" gemäss Fig. 10 erhält der DC-Motor 46 (Fig. 2) beim Anfahren mehr Drehmoment. Dies ermöglicht ihm, auch unter schwierigen Bedingungen anzufahren. Dazu wird, solange sich der ASIC (application-specific integrated-circuit) im STARTUP befindet, die Stromgrenze um 10 bis 50 %, vorliegend um 20 %, angehoben. Ein STARTUP-Signal 100 gibt an, ob s ich d ie K ontrolllogik d es M otors i m D igitalblock 40 (Fig. 1) i m A ufstarten oder im stabil geregelten Betrieb befindet. Beim Aufstarten wird der Motor beschleunigt, sobald drei BEMF-Nulldurchgänge ZERO-Impulse 18 detektiert worden sind. Nach dem Abschluss des STARTUP-Vorgangs übernimmt der Drehzahlregler 28 (Fig. 1) den Motor und führt in auf den geforderten Sollwert. Obwohl gemäss Fig. 10 der Boost aktiviert ist, schafft es der Motor nicht auf Anhieb so schnell zu beschleunigen, dass ZERO-Signale 18 erzeugt werden können. Ursachen für dieses Versagen könnten zu hohe Lasten sein oder auch ein unglücklich stehender Rotor. Der START-Algorithmus erzeugt nun nach Ablauf einer vorgegebenen Anzahl von Time outs 98 selbst NEXT-Impulse 22. Nach drei ZERO-Signalen 18 geht das STARTUP-Signal 100 nach LO (low) und der Zykluszähler 24 (Fig. 1) übernimmt den Motor. Die gegen die Zeit t aufgetragene Stromgrenze geht aus dem unteren Teil von Fig. 10 hervor. Beim Einschalten des Z ykluszählers 24 sinkt die Stromgrenze Boost L_{B} im Bereich 102 von 120 % auf die Stromgrenze L_{N} Normalbetrieb 104 von 100 %. Boost und STARTUP werden ausgeschaltet, wenn drei ZERO-Impulse 18 detektiert wurden, d. h. eine Drehzahl von etwa 200 rpm erreicht ist.

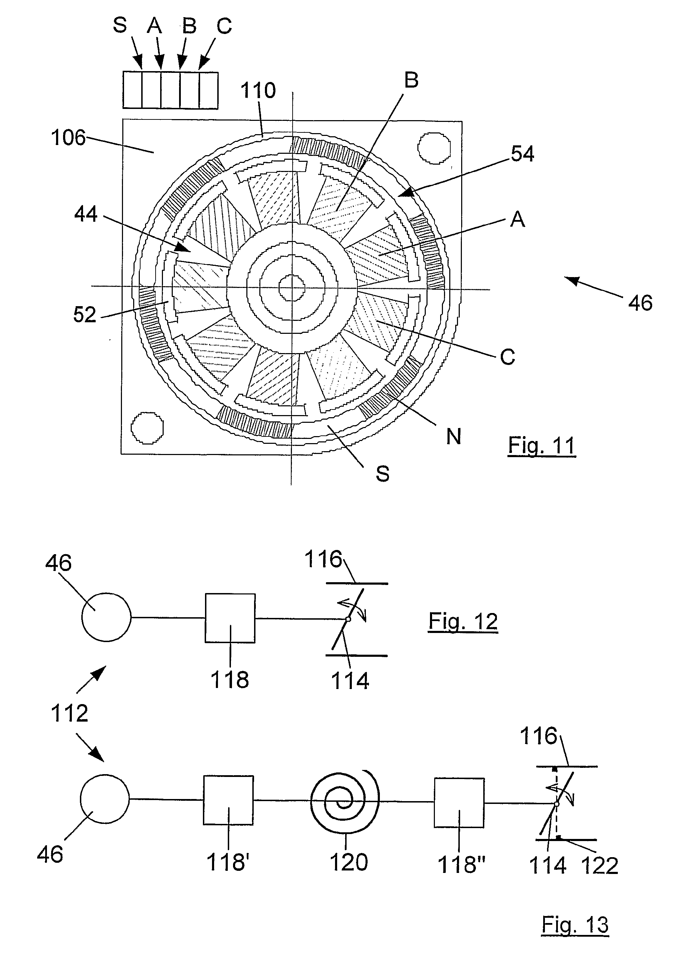

Fig. 11 zeigt einen DC-Motor 46 mit einem zwölfpoligen (6m) Rotor 54 mit sechs (3n) magnetischen Polpaaren Nord N und Süd S. Der Stator 44 umfasst neun Statorpole 52 bzw. Anker mit je drei Statorspulen A, B und C, d.h. n=3 und m=6. Der Dauermagnet-Rotor 54 ist mittels einer in einer Grundplatte 106 gelagerten Antriebswelle mit einem becherförmigen Aussenläufer gehaltert.

Fig. 12 zeigt einen Stellantrieb 112 mit einem Stellglied 114 in Form einer schwenkbaren Klappe in einem HLK-Rohr 116. Ein DC-Motor 46 schwenkt die Klappe mittels eines stark untersetzten Reduktionsgetriebes 118.

Fig. 13 zeigt einen als Federantrieb ausgebildeten Stellantrieb 112. Zwischen dem DC-Motor 46 und dem Stellglied 114 ist eine Getriebemechanik 118', 118" ausgebildet, welche durch eine Spiralfeder 120 ergänzt ist. Ein erstes Reduktionsgetriebe 118' ist stark untersetzt, ein zweites Reduktionsgetriebe 118" nur noch verhältnismässig wenig. Die Feder 120 ist vorgespannt, sie schliesst bei einem Stromausfall das klappenförmige Stellglied 114. Ein zu schnelles Schliessen wird durch die Massnahmen gemäss der Beschreibung von Fig. 2 verhindert, ein Kurzschliessen von zwei Statorspulen gegen die Erde erfolgt in der dort angegebenen Weise.

Alle Einzelelemente des Stellantriebs 112, DC-Motors 46, Getriebe 118 oder 118', 118", Spiralfeder 120 und Stellglied 114 sind starr miteinander verbunden.

Die Endposition, die ZU-Position, des klappenförmigen Stellglieds 114 ist erreicht, wenn es an Anschlagnocken 122 anliegt.

## Patentansprüche

1. Verfahren zum Ansteuern eines bürstenlosen, einen Stator (44) und einen Rotor (54) umfassenden DC-Motors (46), welcher ein stark untersetztes Reduktionsgetriebe eines Stellantriebs für eine Klappe oder für ein Ventil zur Regelung eines Gas- oder Flüssigkeitsvolumenstroms betätigt, insbesondere auf dem Gebiet Heizung-Lüftung-Klima (HLK), Brand- und Raumschutz, wobei der elektrische Stromfluss in die Statorspulen (A, B, C) ohne eingebaute Positionssensoren programmgesteuert kommutiert wird, **dadurch gekennzeichnet, dass** eine Elektronik die Umdrehungen des Rotors (54) des DC-Motors (46) zählt und dass Algorithmen für Start und Stop bewirken, dass Motordrehzahlen unterhalb einer bestimmten Drehzahl schnell und ohne Entstehung von Zählfehlern durchlaufen werden.

2. Verfahren nach Anspruch 1, **dadurch gekennzeichnet, dass** die Motordrehzahlen unterhalb von etwa 200 rpm schnell und ohne Entstehung Von Zählfehlern durchlaufen werden.

3. Verfahren nach Anspruch 1 oder 2, **dadurch gekennzeichnet, dass** Algorithmen bewirken, dass zu niedrige Drehzahlen des Rotors vermieden werden, welche undefinierte, schleifende Schnitte von sinusförmigen oder sinusartigen Kurven mit der Nulllinie ergeben.

4. Verfahren nach Anspruch 1, **dadurch gekennzeichnet, dass** eine minimale Drehzahl unterhalb welcher Drehzahlen schnell und ohne Entstehung von Zählfehlern durchlaufen werden, dadurch bestimmt ist, dass die Nulldurchgänge der Phasenspannungen erst ab der bestimmten minimalen Drehzahl des Rotors eindeutig detektiert werden können.

5. Verfahren nach Anspruch 1, **dadurch gekennzeichnet, dass** die Polaritäten der Nulldurchgänge der Phasenspannungen (DRA, DRB, DRC) mit BEMF-Komparatoren (12) geprüft, jeder Polaritätswechsel einer Rotorposition zugeordnet und die nächste Kommutierung bestimmt wird.

6. Verfahren nach Anspruch 2, **dadurch gekennzeichnet, dass** die gültigen Nulldurchgängen von drei Phasenspannungen (DRA, DRB, DRC) detektiert werden, und die erzeugten BEMF-Signale (13) die Umschaltung zwischen den drei Phasenspannungen (DRA, DRB, DRC) steuern.

7. Verfahren nach Anspruch 3, **dadurch gekennzeichnet, dass** die gültigen Nulldurchgänge (56) mittels eines ZERO-Detektors (14) erkannt und ZERO-Impulse (18) erzeugt werden.

8. Verfahren nach einem der Ansprüche 1 bis 4, **dadurch gekennzeichnet, dass** aus den BEMF-Signalen (13), die bei gültigen Nulldurchgängen ZERO-Impulse (18) bewirken, von einem Periodenregler 20 der nächste Kommutierungszeitpunkt berechnet und ein entsprechendes Steuersignal, ein NEXT-Impuls (22), abgegeben wird.

9. Verfahren nach einem der Ansprüche 2 bis 5, **dadurch gekennzeichnet, dass** die Drehrichtung des Rotors (54) mittels der BEMF-Komparatoren (12) ermittelt wird, indem die BEMF-Komparatorenschwellen (58) je nach Polarität des erwarteten Nulldurchgangs knapp über oder unter der Nulllinie (S) der Phasenspannungen (DRA, DRB, DRC) gelegt werden.

10. Verfahren nach Anspruch 6, **dadurch gekennzeichnet, dass** die Drehrichtung des Rotors (54) in den hochohmigen Kommutierungslücken (L) der Phasenspannungen (DRA, DRB und DRC), bei niedrigen Drehzahlen vorzugsweise am Ende der Kommutierungslücken und bei hohen Drehzahlen am Ende der passiven PWM-Phase ermittelt wird.

11. Verfahren nach einem der Ansprüche 2 bis 7, **dadurch gekennzeichnet, dass** der DC-Motor (46) beim Starten die Endstufen kommutiert und deren Stromgrenze (102) für einen beschleunigten Start erhöht wird, vorzugsweise um 10 bis 50%, insbesondere um etwa 20 %, bis gültige BEMF-Signale erreicht werden, wonach die Kommutierung der nächsten Phase zwischen zwei Nulldurchgänge gelegt wird.

12. Verfahren nach Anspruch 8, **dadurch gekennzeichnet, dass** nach einer erfolglosen Bestromung der ersten Endstufe eine Logik schrittweise die Bestromung der jeweils nächsten Endstufe kommutiert, bis eine für den Rotor (54) günstige Anlaufposition erreicht wird.

13. Verfahren nach Anspruch 8 oder 9, **dadurch gekennzeichnet, dass** der Rotor (54) bei fehlendem Erkennen eines Nulldurchgangs einer Phasenspannung nach einer ersten Kommutierung mit seiner Resonanzfrequenz in der neutralen Position pendelt, und durch diese Nulldurchgänge gültige BEMF-Signale erreicht werden.

14. Verfahren nach Anspruch 9 oder 10, , **dadurch gekennzeichnet, dass** die Logik eine falsche Drehrichtung des Rotors (54) anhand der falschen Polarität der BEMF-Signale (13) erkennt und durch Erhöhen des Zählerstandes des Zykluszählers (24) um zwei Schritte korrigiert.

15. Verfahren nach einem der Ansprüche 1 bis 11, **dadurch gekennzeichnet, dass** der Rotor (54) in einem ersten Schritt zum Abbremsen und Halten vorerst alle Statorspulen (A, B, C) unter weitergehender Kommutierung durch Kurzschliessen stromlos schaltet, nach dem Erreichen eines vorgegebenen Schwellenwertes von vorzugsweise höchstens etwa 400 Umdrehungen pro Minute (rpm) in einem zweiten Schritt mit einem zur Blockierung führenden, stark erhöhten Stromstoss (65) vom nächsten auf den letzten Kommutierungszustand wechselt, und in einem dritten Schritt die Statorspulen (A, B,C) des Rotors (54) durch Kurzschliessen wiederum stromlos schaltet oder mit niedriger Pulsbreitenmodulation (PWM) hemmt.

16. Verfahren nach Anspruch 12, **dadurch gekennzeichnet, dass** der Rotor (54) im ersten Schritt aktiv in die Gegenrichtunggeschaltet wird.

17. Verfahren nach Anspruch 12 oder 13, **dadurch gekennzeichnet, dass** zum Erreichen und Halten eines hohen Anpressdrucks durch das Reduktionsgetriebe in Anschlagstellung der Klappe oder des Ventils der durch den Anschlag abgewürgte DC-Motor (46) wegen des Rotorträgheitsdrehmoments noch einige Umdrehungen unkontrolliert weiterdreht, die Rotorposition durch eine unmittelbar anschliessende kurze Beschleunigung in Gegenrichtung mittels BEMF-Signalen (13) erkannt und der Rotor (54) kontrolliert gebremst und gehalten wird.

18. Verfahren nach Anspruch 14, **dadurch gekennzeichnet, dass** die Beschleunigung in Gegenrichtung erst nach dem Entspannen des Untersetzungsgetriebes erfolgt.

19. Verfahren nach einem der Ansprüche 1 bis 15, **dadurch gekennzeichnet, dass** die Algorithmen abrufbar gespeichert werden.

20. Verfahren nach einem der Ansprüche I bis 16, **dadurch gekennzeichnet, dass** jede Motorkommutierung erfasst und einem Zählwerk mit speziellen Algorithmen zugeführt wird.

21. Verfahren nach einem der Ansprüche 1 bis 18 für einen Stellantrieb mit einer vorgespannten Feder (120), insbesondere mit einer Spiralfeder (120), **dadurch gekennzeichnet, dass** bei einem Stromunterbruch zwei von drei individuell bewegbaren Brückenschaltern (a, b, c) einer Schaltergruppe (50) zwei von drei Statorspulen (A, B, C) des DC-Motors (46) gegen die Erde kurzschliessen, wenn eine einstellbare Grenz-Drehzahl des Rotors (54) unterschritten wird.

22. Verfahren nach Anspruch 19, **dadurch gekennzeichnet, dass** ein Brückenschalterpaar (a und b, a und c, b und c) über ein pulsweitenmoduliertes Steuersignal von zugeordneten Transistoren bestätigt wird, vorzugsweise mit zunehmend längeren Zeitintervallen.

23. Bürstenloser DC-Motor (46) ohne Positionssensoren zur Durchführung des Verfahrens nach einem der Ansprüche 1 bis 20, **dadurch gekennzeichnet, dass** er einen Stator (44) mit drei Statorspulen (A, B, C), welche sich über 3n Statorpole (52) erstrecken, und einen ringförmigen Dauermagnet-Rotor (54) mit 2m Dauermagnetsegmenten alternierender Polarität (N, S), einem coaxialen becherförmigen Aussenläufer (110) und einer coaxialen Antriebswelle (108) umfasst, wobei n und m ganzzahlige, voneinander unabhängige Multiplikationsfaktoren 1, 2, 3, 4... sind.

24. DC-Motor (46) nach Anspruch 21, **dadurch gekennzeichnet, dass** n - 1 und m = 1 oder n = 3 und m = 6 ist.

## Claims

1. Method for the control of a brushless d, c. motor (46), comprising a stator (44) and a rotor (54), which drives a high step-down ratio reducing gear of an actuator for a damper or a valve for the control of a gas or liquid volume stream, specifically in the field of heating, ventilation and air-conditioning (HVAC), fire protection and room protection, whereby the flow of electric current in the stator coils (A, B, C) is commutated by program-control without the use of on-board positional sensors, **characterised in that** an electronic circuit counts the rotations of the rotor (54) of the d.c. motor (46), and **in that** algorithms for start-up and stop functions ensure that the transition through motor speeds below a specific speed of rotation is completed rapidly and without counting errors.

2. Method according to Claim 1, **characterized in that** the transition through motor speeds below the order of 200 r.p.m. is completed rapidly and without counting errors.

3. Method according to claim 1 or 2, **characterized in that** algorithms prevent excessively low speeds of rotation of the rotor, which are associated with undefined and looped sections of sine-wave or sinusoidal curves intersecting with the zero line.

4. Method according to claim 1, **characterized in that** a minimum speed of rotation is defined, below which the transition through speeds of rotation is completed rapidly and without counting errors, such that the zero-crossings of the phase voltages can only be clearly detected with effect from the specified minimum speed of rotation of the rotor.

5. Method according to claim 1, **characterized in that** the polarities at the zero-crossings of the phase voltages (DRA, DRB, DRC) are checked by means of BEMF comparators (12), each polarity reversal is associated with a rotor position and the next commutation is defined.

6. Method according to claim 2, **characterized in that** the valid zero-crossings of three phase voltages (DRA, DRB, DRC) are detected, and the BEMF signals (13) generated control the switchover between the three phase voltages (DRA, DRB, DRC).

7. Method according to claim 3, **characterized in that** the valid zero-crossings (56) are detected by means of a ZERO detector (1A), and ZERO pulses (18) are generated.

8. Method according to one of Claims 1 to 4, **characterized in that**, from the BEMF signals (13) which initiate ZERO pulses (18) in response to valid zero-crossings, a cycle controller 20 calculates the next commutation time point, and a corresponding control signal, a NEXT pulse (22), is generated.

9. Method according to one of Claims 2 to 5, **characterized in that** the direction of rotation of the rotor (54) is determined by means of the BEMF comparators (12), wherein the BEMF comparator thresholds (58), depending upon the polarity of the anticipated zero-crossing, lie by a slight margin above or below the zero line (S) of the phase voltages (DRA, DRB, DRC).

10. Method according to claim 6, **characterized in that** the direction of rotation of the rotor (54) in the high-resistance commutation gaps (L) of the phase voltages (DRA, DRB, DRC) is preferably determined, at low speeds of rotation, at the end of the commutation gaps and, at high speeds of rotation, at the end of the passive PWM phase.

11. Method according to one of Claims 2 to 7, **characterized in that**, upon start-up, the d.c. motor (46) is commutated to the output stages, and the current limit (102) thereof for accelerated start-up is increased, preferably by 10 to 50% and specifically by the order of 20%, until valid BEMF signals are achieved, whereafter the commutation of the next phase proceeds between two zero-crossings.

12. Method according to claim 8, **characterized in that**, after an unsuccessful energization of the first output stage, a logic circuit incrementally commutates the energization of the respectively next output stage, until such time as the rotor (54) achieves a favourable start-up position.

13. Method according to claim 8 or 9, **characterized in that** the rotor (54), in the absence of the detection of a zero-crossing in a phase voltage after an initial commutation, oscillates at its resonant frequency in the neutral position, and by means of these zero-crossings valid BEMF signals are achieved.

14. Method according to claim 9 or 10, **characterized in that** the logic circuit detects an incorrect direction of rotation of the rotor (54) by reference to the incorrect polarity of the BEMF signals (13), and corrects the former by increasing the counter reading of the cycle counter (24) by two increments.

15. Method according to one of Claims 1 to 11, **characterized in that** the rotor (54), in a first step for braking and stopping, initially interrupts the supply to all the stator coils (A, B, C) by short-circuiting, with continuing commutation, in a second step, upon the achievement of a predetermined threshold value of preferably no more than the order of 400 r.p.m. (revolutions per minute), switches over from the next to the last commutation state by the delivery of a substantially increased current surge (65), which executes a blacking function and, in a third step, interrupts the supply again to the stator coils (A, B, C) of the rotor (54) by short-circuiting or inhibits them by low pulse width modulation (PWM).

16. Method according to Claim 12, **characterized in that** the rotor (54), in the first step, is actively switched to the reverse direction.

17. Method according to Claim 12 or 13, **characterized in that**, for the achievement and maintenance of a high application pressure by the reducing gear in the limit stop position of the damper or valve of the d.c. motor (46) stalled at the limit stop, the moment of inertia of the rotor causes a number of further uncontrolled revolutions, the rotor position is detected by an immediately subsequent and brief acceleration in the reverse direction, by means of BEMF signals (13), and the rotor (54) is braked and stopped in a controlled manner.

18. Method according to Claim 14, **characterized in that** the acceleration in the reverse direction only proceeds upon the release of the load on the stepdown gearing.

19. Method according to one of Claims 1 to 15, **characterized in that** the algorithms are retrievably stored.

20. Method according to one of Claims 1 to 16, **characterized in that** each motor commutation is detected and is referred to a counting device using specific algorithms.

21. Method according to one of Claims 1 to 18 for an actuator with a pre-tensioned spring (120), specifically a spiral spring (120), **characterized in that**, in the case of a current interruption, two out of three individually moveable bridge switches (a, b, c) in a switching group (50) short-circuit two out of three stator coils (A, B, C) of the d.c. motor (46) to ground, when the speed of rotation of the rotor (54) falls below a configurable limiting value.

22. Method according to Claim 19, **characterized in that** a bridge switch pair (a and b, a and c, b and c), by means of a pulse width modulated control signal, is actuated by associated transistors, preferably with increasingly long time intervals.

23. Brushless d.c. motor (46), without positional sensors, for the execution of method according to one of Claims 1 to 20, **characterized in that** it comprises a stator (44) with three stator coils (A, B, C), which extend over 3n stator poles (52) and an annular permanent magnet rotor (54) with 2m permanent magnet segments of alternating polarity (N, S), a cup-shaped coaxial external rotor (110) and a coaxial drive shaft (108), wherein n and m are whole-number and mutually independent multiplication factors 1, 2, 3, 4, etc.

24. D.c. motor which according to Claim 21, **characterized in that** n = 1 and m = 1, or n = 3 and m = 6.

## Revendications

1. Procédé pour commander un moteur à courant continu sans balais (46) comprenant un stator (44) et un rotor (54), lequel actionne un engrenage réducteur fortement démultiplié d'un mécanisme de commande pour un clapet ou pour une vanne pour réguler un flux volumique de liquide ou de gaz, en particulier dans le domaine du chauffage/ventilation/climatisation (HLK), ( de la protection contre les incendies et des bâtiments, dans lequel le flux de courant électrique dans les bobines de stator (A, B, C) est commuté par commande par programme sans capteurs de position intégrés,
**caractérisé en ce qu'**un dispositif électronique compte les rotations du rotor (54) du moteur à courant continu (46) et **en ce que** des algorithmes pour le démarrage et l'arrêt ont pour effet que des régimes du moteur inférieurs à un régime prédéterminé sont parcourus rapidement et sans que des erreurs de comptage soient produites.

2. Procédé selon la revendication 1, **caractérisé en ce que** les régimes du moteur inférieurs à environ 200 rpm sont parcourus rapidement et sans que des erreurs de comptage soient produites.

3. Procédé selon la revendication 1 ou 2, **caractérisé en ce que** des algorithmes ont pour effet que des régimes trop bas du rotor sont évités, lesquels donnent des sections traînantes, indéfinies, de courbes sinusoïdales ou de type sinusoïdal avec la ligne zéro.

4. Procédé selon la revendication 1, **caractérisé en ce qu'**un régime minimal, en-deçà duquel des régimes sont parcourus rapidement et sans que des erreurs de comptages soient produites, est déterminé **en ce que** les passages par zéro des tensions de phase peuvent seulement être détectés de manière univoque à partir du régime minimal déterminé du rotor.

5. Procédé selon la revendication 1, **caractérisé en ce que** les polarités des passages par zéro des tensions de phase (DRA, DRB, DRC) sont contrôlées avec des comparateurs BEMF (12), **en ce que** chaque changement de polarité est associé à une position du rotor et **en ce que** la commutation suivante est déterminée.

6. Procédé selon la revendication 2, **caractérisé en ce que** les passages par zéro valides de trois tensions de phase (DRA, DRB, DRC) sont détectés, et **en ce que** les signaux BEMF (13) générés commandent la commutation entre les trois tensions de phase (DRA, DRB, DRC).

7. Procédé selon la revendication 3, **caractérisé en ce que** les passages par zéro valides (56) sont reconnus au moyen d'un détecteur ZERO (14) et **en ce que** des impulsions ZERO (18) sont générées.

8. Procédé selon l'une des revendications 1 à 4, **caractérisé en ce que**, à partir des signaux BEMF (13) qui produisent des impulsions ZERO (18) en cas de passages par zéro valides, un régulateur de période 20 calcule le moment de commutation suivant et émet un signal de commande correspondant, une impulsion NEXT (22).

9. Procédé selon l'une des revendications 2 à 5, **caractérisé en ce que** le sens de rotation du rotor (54) est déterminé à l'aide des comparateurs BEMF (12) **en ce que** les seuils des comparateurs BEMF (58) sont placés juste au-dessus ou en-dessous de la ligne zéro (S) des tensions de phase (DRA, DRB, DRC) selon la polarité du passage par zéro souhaitée.

10. Procédé selon la revendication 6, **caractérisé en ce que** le sens de rotation du rotor (54) est déterminé dans les intervalles de commutation (L) à valeur ohmique élevée des tensions de phase (DRA, DRB, DRC), en cas de régimes bas, de préférence à la fin des intervalles de commutation, et en cas de régimes élevés, à la fin de la phase PWM passive.

11. Procédé selon l'une des revendications 2 à 7, **caractérisé en ce que**, lors du démarrage, le moteur à courant continu (46) commute les étages de sortie et la limite de courant (102) de ceux-ci étant augmentée pour un démarrage accéléré, de préférence de 10 à 50%, en particulier de l'ordre de 20%, jusqu'à atteindre des signaux BEMF valides, après quoi la commutation de la phase suivante est placée entre deux passages par zéro.

12. Procédé selon la revendication 8, **caractérisé en ce que**, après une alimentation en courant sans succès du premier étage de sortie, une logique commute pas à pas l'alimentation en courant de l'étage de sortie respectivement suivant jusqu'à l'atteinte d'une position de démarrage favorable pour le rotor (54).

13. Procédé selon la revendication 8 ou 9, **caractérisé en ce que**, en cas de manque de reconnaissance d'un passage par zéro d'une tension de phase après une première commutation, le rotor (54) oscille avec sa fréquence de résonance dans la position neutre, et **en ce que** grâce à ces passages par zéro, des signaux BEMF valides sont obtenus.

14. Procédé selon la revendication 9 ou 10, **caractérisé en ce que** la logique reconnaît un sens de rotation erroné du rotor (54) à laide de la polarité erronée des signaux BEMF (13) et le corrige en augmentant la position de compteur du compteur de cycles (24) de l'ordre de deux incréments.

15. Procédé selon l'une des revendications 1 à 11, **caractérisé en ce que**, dans une première étape pour le freinage et le maintien, le rotor (54) commute tout d'abord hors tension par court-circuitage toutes les bobines de stator (A, B, C) avec une commutation se poursuivant, dans une deuxième étape, après l'atteinte d'une valeur de seuil prescrite de préférence de l'ordre de 400 rotations par minutes (rpm) tout au plus, change pour passer, avec une impulsion de courant (65) fortement augmentée menant au blocage, de l'état de commutation suivant au dernier état de commutation et dans une troisième étape, commute de nouveau hors tension par court-circuitage les bobines de stator (A, B, C) du rotor (54) ou bien les inhibe par modulation des impulsions en largeur (PWM).

16. Procédé selon la revendication 12, **caractérisé en ce que**, dans la première étape, le rotor (54) est commuté activement dans le sens contraire.

17. Procédé selon la revendication 12 ou 13, **caractérisé en ce que**, pour atteindre et maintenir une pression d'application élevée par l'engrenage de réduction dans la position de butée du clapet ou de la vanne, le moteur à courant continu (46) étranglé par la butée continue de tourner de manière incontrôlée de l'ordre de quelques rotations en raison du couple d'inertie du rotor, la position du rotor étant reconnue grâce à une brève accélération s'en suivant directement dans le sens contraire au moyen des signaux BEMF (13), et le rotor (54) étant freiné de manière contrôlée et retenu.

18. Procédé selon la revendication 14, **caractérisé en ce que** l'accélération en sens contraire s'effectue seulement après la relâche de l'engrenage démultiplicateur.

19. Procédé selon l'une des revendications 1 à 15, **caractérisé en ce que** les algorithmes sont mis en mémoire de marnière consultable.

20. Procédé selon l'une des revendications 1 à 16, **caractérisé en ce que** chaque commutation du moteur est détectée et est amenée à un compteur avec des algorithmes spéciaux.

21. Procédé selon l'une des revendications 1 à 18 pour un mécanisme de commande avec un ressort précontraint (120), en particulier un ressort hélicoïdal (120), **caractérisé en ce qu'**en cas d'une coupure de courant, deux commutateurs de pont (a, b, c) sur trois, mobiles individuellement, d'un groupe de commutateurs (50) court-circuitent à la terre deux bobines de stator (A, B, C) sur trois du moteur à courant continu (46) lorsqu'un régime limite réglable du rotor (54) est dépassé par le bas.

22. Procédé selon la revendication 19, **caractérisé en ce qu'**une paire de commutateurs de pont (a et b, a et c, b et c) est confirmée par un signal de commande à modulation des impulsions en largeur de transistors associés, de préférence avec des intervalles de temps de plus en plus longs.

23. Moteur à courant continu sans ballais (46) sans capteurs de position pour la mise en oeuvre du procédé selon l'une des revendications 1 à 20, **caractérisé en ce qu'**il comprend un stator (44) avec trois bobines de stator (A, B, C) qui s'étendent sur 3n pôles de stator (52), et un rotor à aimant permanent annulaire (54) avec 2m segments à aimant permanent à polarité alternante (N, S), un induit extérieur (110) coaxial en forme de godet et un arbre d'entraînement (108) coaxial, dans lequel n et m sont des facteurs de multiplication 1, 2, 3, 4,... entiers indépendants les uns des autres.

24. Moteur à courant continu (46) selon la revendication 21, **caractérisé en ce que** n = 1 et m = 1 ou n = 3 et m = 6 ,
